# EUROPEAN PATENT APPLICATION

(11) **EP 0 754 619 A1**
(43) Date of publication of application: **22.01.1997**
(21) Application number: 96305162.8
(22) Date of filing: 12.07.1996
(51) Int. Cl.: B63H 25/24, B63H 25/26, G05D 1/02

(54) **Boat steering drive systems**

(30) Priority: 19.07.1995 GB 9514822
(71) Applicant: MORSE CONTROLS LIMITED, Basildon Essex SS14 3ES (GB)
(72) Inventor: Crack, David John, Chelmsford, Essex (GB)
(74) Representative: Allden, Thomas Stanley

(57) **Abstract**

A boat steering drive system has a manually operable helm unit (5) and an autopilot controlled drive means (69) which is drivingly coupled to the helm unit (5) by means of a system of gears (30, 32, 35, 38, 39, 50, 52, 55, 57, 64, 66; 30, 32, 35, 38, 39, 100, 110, 112, 115, 117, 118, 120). Disposed with the system ofgears (30, 32, 35, 38, 39, 50, 52, 55, 57, 64, 66; 30, 32, 35, 38, 39, 100, 110, 112, 115, 117, 118, 120) is a decoupling means (50) which is operable to break and reconnect the drive coupling between the drive means (69) and the helm unit (5) and a sensing means which detects when the operator of the craft is attempting to manually override the drive means (50). Upon sensing such manual override, the sensing means decouples the drive means (50) from the helm unit (5) by actuation of the decoupling means (50), and the drive means (69) then remains decoupled from the helm unit (5) until an instruction is received from the operator to recouple the drive means (69) to the helm unit (5)

## Description

The present invention relates to boat steering drive systems.

Autopilot systems for watercraft are well known in the art. One such known autopilot system comprises a standard rotary helm unit on the back of which is mounted an autopilot drive system such that the helm unit and drive system are housed within a unitary housing which is mounted below the craft's dashboard panel. In this known assembly, a servo motor is in driving engagement, through a first gear train, with a first shaft, and the steering shaft of the standard rotary helm unit is in driving engagement, through a second gear train, with a second shaft which is coaxial with and axially spaced from the first shaft. The first and second shafts carry, on their ends which face each other, the two parts of a dog clutch, and the first shaft is movable along its axis, by the actuation of a solenoid, so as to engage the two parts of the dog clutch and thereby complete the drive link between the servo motor and the steering shaft, thus enabling the craft to be controlled by the autopilot. When the system is disengaged, the ram of the solenoid retracts and the action of a spring on the first shaft causes it to slide away from the second shaft, thereby disengaging the dog clutch and isolating the servo motor from the steering shaft, enabling the craft to be manually steered.

With this known system, if the operator of the watercraft wishes to steer the craft manually whilst the autopilot is still engaged, for example if emergency avoiding action is necessary in order to avoid an obstacle in the path of the craft, sufficient force must be applied through the steering shaft by the operator to overcome the torque developed by the servo motor and turn the motor shaft against the electromagnetic force developed by the motor, and this may prove to be beyond the physical capability of the operator. Also, even if the operator has enough physical strength to steer the craft against the servo motor, whilst the manual manoeuvre is being performed, the autopilot system remains engaged, so that when the operator has completed the emergency manoeuvre and releases the steering wheel, the autopilot will steer the craft back on to its pre-programmed bearing, which could head the craft back towards the obstacle which the operator had wished to avoid.

According to the present invention there is provided a boat steering drive system having a manually operable helm unit, an autopilot controlled drive means, means for drivingly coupling the autopilot controlled drive means to the helm unit, means for enabling manual over-ride of the autopilot controlled drive means, and means for ensuring that the autopilot does not steer the craft back on to its present course following manual override.

A boat steering drive system in accordance with the invention has the advantage that it allows an operator of the craft to manually over-ride the autopilot, for example in a situation when emergency avoiding action is required. Also, the inclusion of the means for ensuring that the autopilot does not steer the craft back on to its preset course following manual over-ride makes the system additionally safe since, when the operator releases the steering wheel at the end of an avoiding manoeuvre, the craft will continue on the newly selected safe course, and will not return to the autopilot's pre-programmed course until the operator actively re-engages the autopilot.

In an advantageous development of the invention the means for enabling manual override of the drive means includes decoupling means for breaking and reconnecting the drive coupling between the drive means and the helm unit. In a preferred embodiment, this decoupling means is a plate-type clutch unit which is disposed within the drive coupling and which is preferably engaged by at least one solenoid. It also preferably includes biasing means acting on at least one of the clutch plates which bias the clutch plates into a disengaged position when the solenoid is de-energized. This has the advantage, as compared with the dog type clutch used in the prior art which will only engage when the two shafts are oriented at multiple of 180° to each other and may fail to disengage when the clutch is under load, that the clutch will engage and disengage regardless of the relative orientation of the clutch plates to each other or the magnitude or direction of the load which is transmitted through the clutch.

In the preferred embodiment, the means for enabling manual over-ride of the autopilot controlled drive means also includes means for signalling the initiation of manual over-ride of the autopilot, preferably mechanical means which moves in reaction to a torque, exceeding a preset limit, being applied through the helm in opposition to the autopilot controlled drive means. Upon detection of such movement, the clutch unit is de-energized, thereby isolating the autopilot controlled drive means from the helm unit and returning uninhibited control to the helm unit, the clutch unit remaining de-energized until reactivated by the operator.

In order that the present invention may be well understood, there will now be described some embodiments thereof, given by way of example, reference being made to the accompanying drawings, in which:
Figure 1 is a sectional side elevation of an automatic boat steering drive system illustrating the general principle underlying the invention shown attached to a standard rotary helm unit;
Figure 2 is a sectional side view of the drive system of Figure 1 showing, in greater detail, a clutch unit thereof;
Figure 3 is apart sectioned front view of the automatic boat steering system and rotary helm unit of Figure 1;
Figure 4 is a back view of the automatic boat steering system of Figure 1 with covers thereof removed;
Figure 5 is a perspective view of a bracket for mounting the clutch unit shown in Figure 2;
Figure 6 is a sectional side elevation of a preferred embodiment of the drive system of the invention, having a differential disposed within it;
Figure 7 is an enlarged view of part of the embodiment shown in Figure 6; and

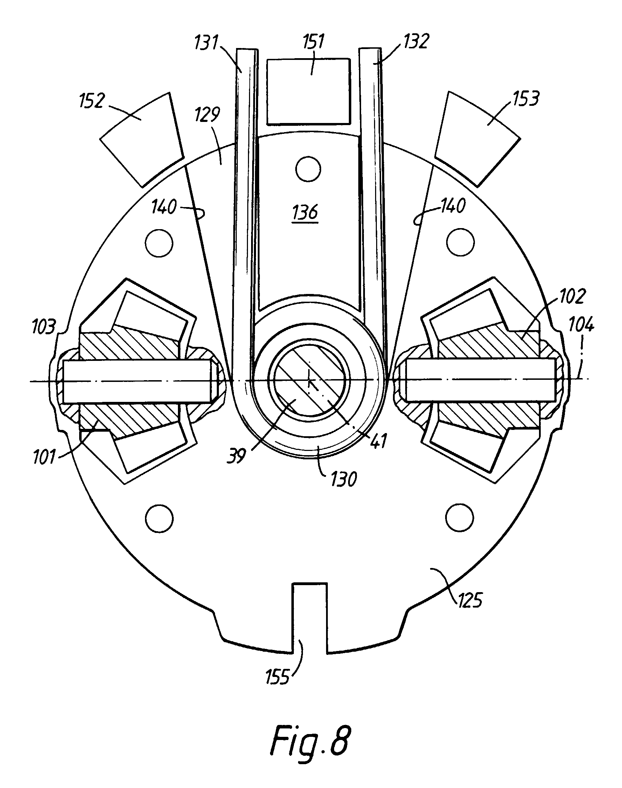

Figure 8 is an end view of a part of the differential of Figure 6 which automatically reacts to the application to the helm by an operator of the craft of a sufficiently large back driving torque.

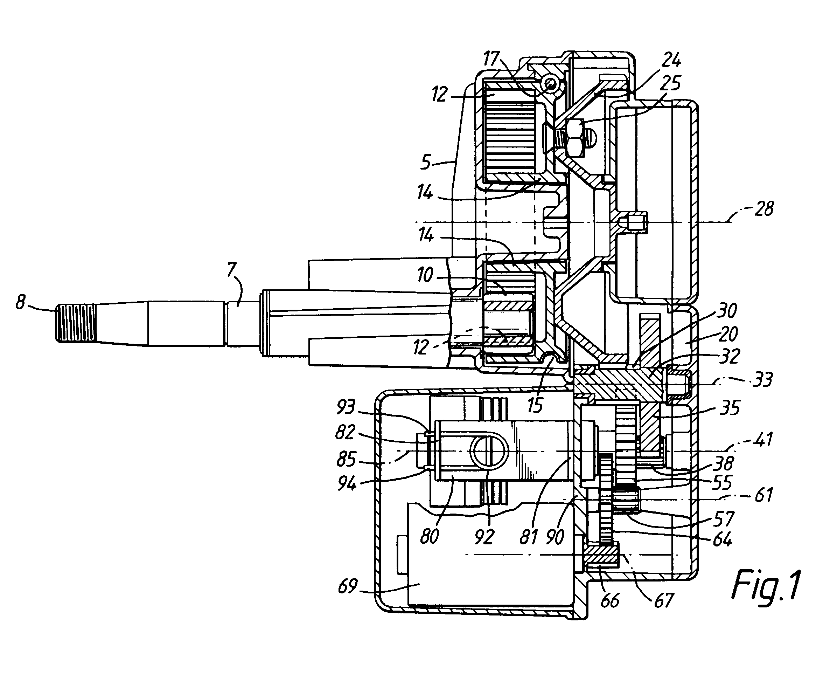

Referring first to Figure 1, an automatic boat steering system, generally denoted by reference numeral 20, which illustrates the general principle underlying the invention is shown attached to the back of a standard rotary helm unit, generally denoted by numeral 5.

The helm unit 5 has a steering shaft 7 to one end 8 of which is attached a steering wheel (not shown). The other end of the steering shaft 7 carries a gear 10 which engages the internal gear teeth 12 of a control cable friction drive ring 14. The friction drive ring 14 has a groove 15 around its outer circumference with teeth therein which engage a push/pull cable 17 such that rotation of the drive ring 14 causes translation of the push/pull cable 17 and thereby controls the steering of the watercraft in which it is mounted. A suitable standard helm unit 5 is a D290 Helm and Cable Assembly manufactured by Morse Marine Products and does not form part of the present invention.

Fixed to the back of the standard helm unit 5 is a spur gear 24 which is attached to the rear of the drive ring 14 by means of nuts and bolts 25 such that the spur gear 24 and the drive ring 14 rotate as one about their common axis 28. The spur gear 24 engages gear teeth 30 formed on a first intermediate shaft 32 which is rotatable about its axis 33 and has fixed to it a gear wheel 35 which rotates with the intermediate shaft 32. The gear wheel 35 drivingly engages a clutch output gear 38 which is mounted on a clutch output shaft 39. The clutch output shaft 39 is rotatable about its axis 41 and is drivingly attached to a first clutch plate 45 of a friction plate clutch assembly 50.

A second clutch plate 47 of the friction plate clutch assembly 50 is attached to a clutch input shaft 52 which is coaxial with the clutch output shaft 49 and, when the clutch plates 45, 47 are disengaged, is rotatable independently of the clutch output shaft 39. The clutch input shaft 52 has fixed thereto a gear 55 which meshes with gear teeth 57 formed on a second intermediate shaft 60, the second intermediate shaft 60 being rotatable about its axis 61. The second inter-mediate shaft 60 also has fixed thereto a gear 64 which engages with a pinion gear 66 fixed to the drive shaft 67 of a servo motor 69. The servo motor 69 is controlled by an electronic autopilot control box (not shown) which is programmed by the operator with a particular bearing in which it is desired the water-craft should travel. The control box receives data from a compass (not shown) and from a sensor (not shown) which monitors the attitude of the watercraft's steering device (rudder, outboard motor or the like), and holds the craft on the desired heading by using the servo motor 69 to move the craft's steering device as necessary.

Such electronic autopilot control boxes are well known in the art and will not, therefore, be described here in further detail.

When the servo motor 69 is activated by the control box, rotation of the drive shaft 67 is transmitted by the various gears 66, 64, 57, 55 through the second intermediate shaft 60 to the clutch input shaft 52, thereby effecting rotation of the second clutch plate 47.

The clutch assembly 50 contains an electro-magnet 75 which is controlled by the autopilot control box and which is positioned behind the first clutch plate 45. When the electromagnet 75 is energized, the first clutch plate 45 experiences an electromagnet force which causes it to move axially towards the second clutch plate 47, frictionally engaging an intermediate clutch plate 72 positioned between the first 45 and second 47 clutch plates which, in turn, frictionally engages the second clutch plate 47 so as to effect rotation of the clutch output shaft 39 with the input shaft 52. Thus, when the clutch 50 is engaged, rotation of the input shaft 52 causes rotation of the clutch output gear 38 mounted on the output shaft 39. This drives the first intermediate shaft 32 which, through the meshing of the gears 35 and 24, drives the control cable drive ring 14 and thereby steers the watercraft.

When the operator of the craft attempts to manually override the servo motor 69, the effect will be to have opposing torques being applied at either end of gear train. According to the basic principle of the invention, these opposing torques are detectable by means disposed within the system 20, which means can transmit a signal that the clutch assembly should be disengaged.

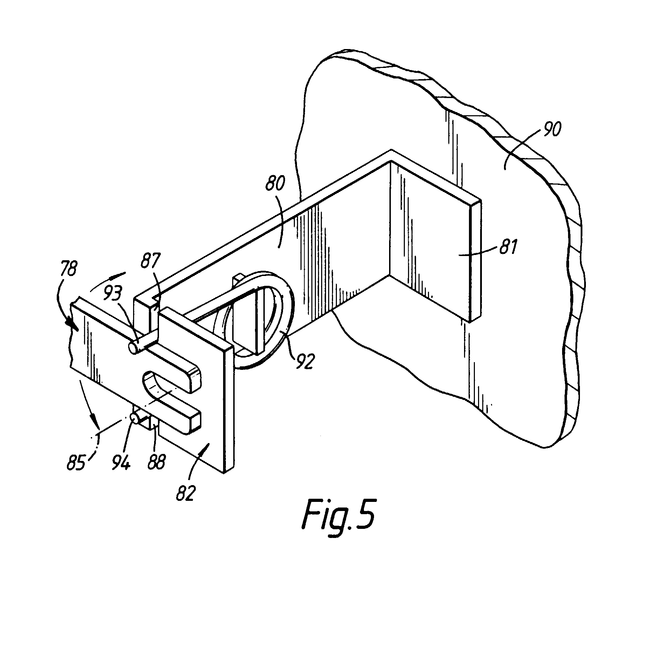

As an additional illustration of this, the clutch assembly 50 could be attached, by means of a mounting arm 78 which is rigidly fixed to the back of the casing of the clutch assembly 50 and which extends radially of the longitudinal axis of the clutch assembly 50, to a rigid mounting bracket 80. The bracket 80 is fixed at one end 81 to a wall 90 of a casing which encloses the drive gears 35, 38, 55, 57, 64, 66 and extends perpendicularly therefrom alongside the clutch assembly 50 and parallel to the axis 41. The free end 82 of the bracket 80 is bent perpendicular to the main body of the bracket 80 so as to be parallel to the wall 90, as seen in Figure 5.

The mounting arm 78 of the clutch assembly 50 is attached to the free end face 82 of the bracket 80 in such a manner as to allow the arm 78, and hence also the clutch assembly 50, to rotate relative to the bracket 80 about an axis 85 which is parallel to the longitudinal axis 41 of the clutch assembly 50. Mounted on the main body of the bracket 80 is a torsional spring 92, the two ends 93, 94 of which extend along the main body of the bracket 80 and engage in slots 87, 88 formed in the end face of the bracket 80. The slots 87, 88 are positioned such that the ends 93, 94 of the spring 92 press on either side of the mounting arm 78 further along the arm 78 towards the axis 41 from the mounting point of the arm 78 on the bracket 80, thereby biasing the arm into a neutral position in which the longitudinal axis of the arm intersects both the axis 41 of the clutch assembly 50 and the axis 85. The spring 92 is prestressed so as to increase the torque which must be developed in the arm 78 about the pivot axis 85 to overcome the restraining force exerted on the arm 78 by the spring 92 and so cause the arm 78 to rotate about its mounting on the bracket 80.

When the operator of the craft tries to steer the craft against the autopilot in an emergency situation, the operator will exert a torque through the steering wheel which opposes the torque exerted on the system by the servo motor 69. The "reverse" torque applied by the operator will be transmitted through the drive ring 14, spur gear 24, and first intermediate shaft 32 into the clutch output shaft 39. Similarly, the "forward" torque developed by the servo motor 69 is transmitted through the second intermediate shaft 60 and into the clutch input shaft 52. As the clutch is engaged, these two shafts 39, 52 must rotate in the same direction, and the operator and servo motor 69 will therefore oppose each other until the torque differential between the two becomes sufficient to cause the clutch assembly 50 to rotate with its mounting arm 78 about the bracket 80 against the restraining moment of the torsion spring 92. A sensor (not shown) is included in the assembly which detects this rotational movement of the whole clutch assembly 50, and, when the clutch assembly has rotated about its mounting through a predetermined angle, for example 15o, the electronic autopilot control box disengages the clutch plates 45, 47, 72, thereby returning full control of the steering of the craft to the operator. The clutch assembly 50 is then biased back to its neutral position by the torsional spring 92, and the clutch plates 45, 47, 72 remain disengaged until the operator re-activates the autopilot.

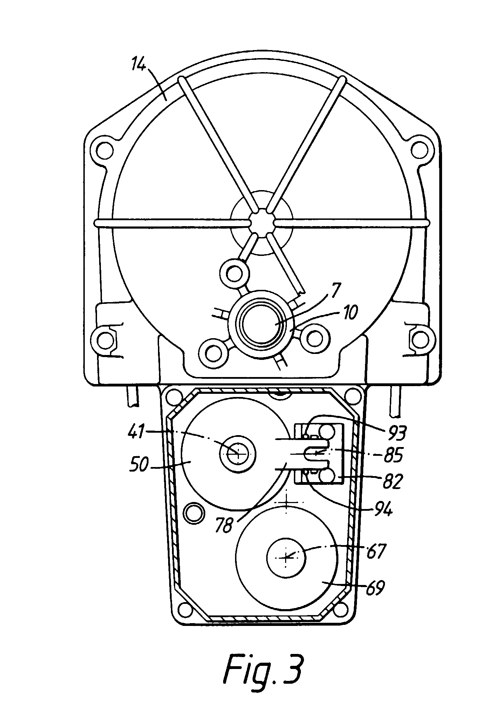

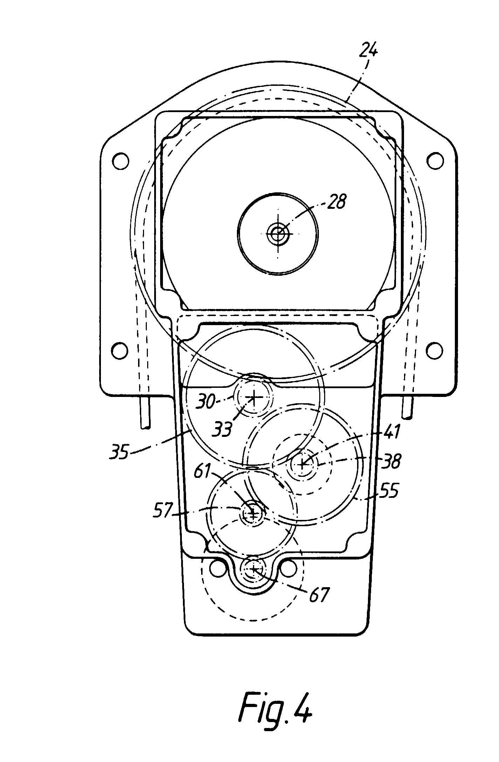

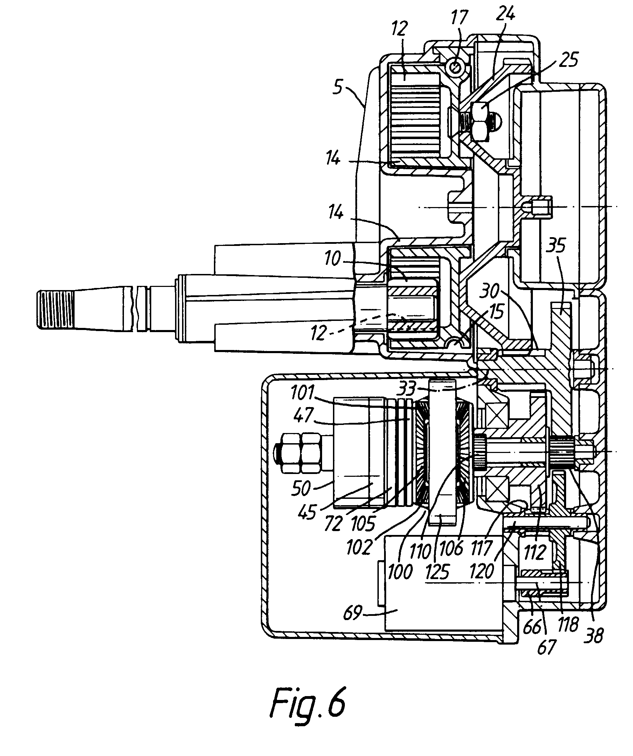

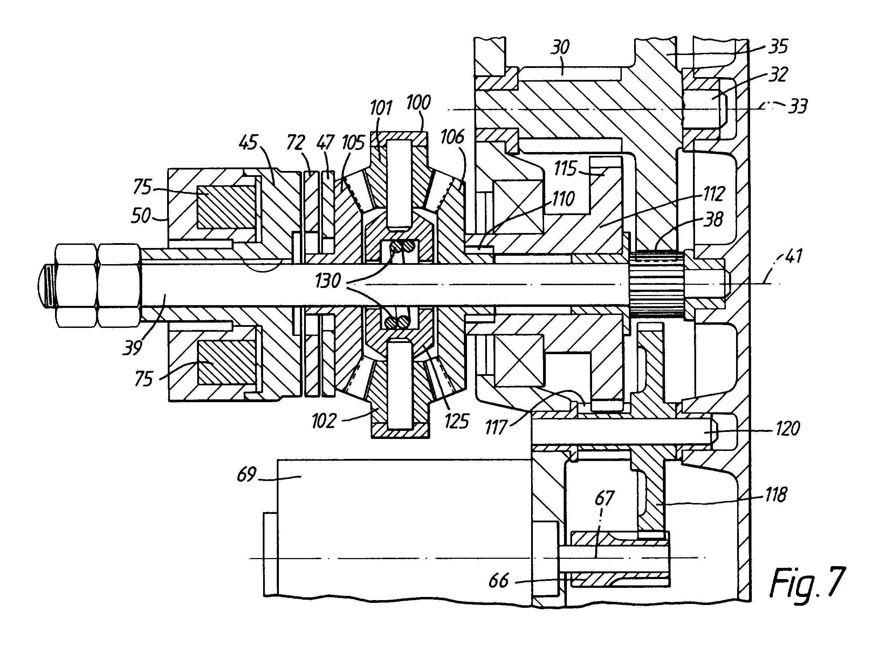

Referring now to Figures 6 and 7, there is shown a sectional side view of a preferred embodiment of the automatic steering system which uses an alternative system for detecting that manual over-ride of the autopilot situation is occurring. In this embodiment, each part which is identical to the corresponding feature shown in Figures 1 to 5 is identified by the same reference numeral.

As described above, this preferred embodiment has a helm unit having a steering shaft, one end of which is attached to a steering wheel and the other end of which is drivingly connected, through a first gear train, to a clutch output shaft 39. As in the previously described embodiment, the clutch output shaft 39 is rotatable about its axis 41 and is drivingly fixed to a first clutch plate 45 of a friction plate clutch assembly 50. A second clutch plate 47 of the clutch assembly 50 is drivingly fixed to one bevel type spur gear 105 on one side of a differential 100. A second bevel spur gear 106 of the differential 100 is drivingly connected, preferably by means of splining, to a clutch input shaft 112 which is coaxial with, and, when the clutch 100 is de-energized, is free to rotate independent of the clutch output shaft 39.

The clutch input shaft 112 has fixed to it a gear 115 which meshes with gear teeth 117 formed on a second intermediate shaft 120. The second intermediate shaft 120 also has fixed thereto a gear 118 which engages with a pinion gear 66 fixed to the motor shaft 67 of a servo motor 69 as described above. In order to give more room for the differential 100, the relative positions of the teeth 117 formed on the second intermediate shaft 120 and the gear 118 fixed thereto is preferably reversed as compared with the general illustration described above.

The differential 100 is coaxial with and, when the clutch 50 is de-energized, is freely rotatable independently of the clutch output shaft 39. Disposed between the two spur gears 105, 106 within the differential 100 are preferably two bevel pinion gears 101, 102, each pinion gear 101, 102 simultaneously engaging both spur gears 105, 106, the longitudinal axis of rotation 103, 104 of each pinion gear 101, 102 being perpendicular to the axis of rotation of the spur gears 105, 106, thereby effecting the differential motion of the spur gears 105, 106. Also included in the differential is a pinion gear carrier 125 shown in more detail in Figure 7, which is preferably disc shaped and is positioned between the two spur gears 105, 106 with its central axis coaxial with the axis of rotation 41 of the spur gears 105, 106.

The pinion gears 101, 102 are mounted in the carrier 125 so each is are able to rotate about its respective axis of rotation 103, 104, but is carried with the carrier 125 upon rotation of the carrier about the main axis of the differential 41. Housed within a recess 129 formed in surface of the carrier 125 is a biasing spring 130, preferably in the form of a coiled torsional spring with two tangentially extending arms 131, 132, similar to the torsional spring in the illustration described above. The recess 129 is formed such that the coils of the spring 130 encircle the clutch output shaft 39 and the arms 131, 132 extend away from the shaft 39 on either side of a raised separating portion 136. Before being positioned in the carrier 125, the spring 130 is pre-stressed such that, when the spring 130 is in position, the arms 131, 132 press on either side of the raised portion 136 with a set load. Either side of the raised portion 136, the recess 129 has a small flat region across which each arm 131, 132 can sweep, and each region is terminated by a further raised portion 140 which limits the arcuate movement of each arm 131, 132 away from the raised separating portion 136.

Fixed to the main casing of the drive system are three stops 151, 152, 153 which protrude into the plane of the two arms 131, 132. The first stop 151, protrudes between the two arms 131, 132 in line with the raised separating portion 136 so that the two arms 131, 132 also press on if thereby setting a neutral or unloaded position of the carrier 125. The other two stops 152, 153 are positioned on either side of the first stop 151 in line with the movement limiting outside edge 140 of the recess 129, so that as one of the arms 131, 132 reaches the limit of its movement with the recess 129, it presses against the outside stop 152, 153 associated with that arm. The carrier 125 and spur gears 105, 106 are preferably mounted on the clutch output shaft using bearings, for example bass races, to allow free rotation thereabout.

Under normal operation of the autopilot, movement of the motor shaft 67 is transmitted, through the second intermediate shaft 120, to the clutch input shaft 112. The rotation of clutch input shaft 112 rotates the spur gear 106 of the differential to which it is splined in the same direction. This rotation of the spur gear 106 causes the pinion gears 101, 102, which are restrained from rotation about the axis 41 due to the biasing of the spring 130, to rotate about their respective longitudinal axis 103, 104, which, in turn cause the spur gear 105 and hence also clutch plate 47 to which it is attached, to rotate about the axis 41 in the opposite direction to the spur gear 106 at the same rate. If the autopilot is engaged so that the clutch is energized, the rotation of the second clutch plate 47 is transmitted through any clutch intermediate plate 72 to the first clutch plate 45 and hence to the clutch output shaft 39 to which the first clutch plate 45 is fixed. The rotation is transmitted through the rest of the gear train to the helm and thence to the rudder in the same way as described above for the first described embodiment.

If the operator of the craft tries to turn the helm whilst the autopilot is engaged, for example to take emergency avoiding action, the force applied by the operator to the steering wheel will be transmitted through the gears 19, 24, 30, 35, 38, the clutch output shaft 39 and the clutch 50 to the first spur gear 105 of the differential 100. Since the autopilot will, at this time still be engaged, the autopilot control system will activate the servo motor 69 in order to try to hold the craft on its pre-programmed course, and the driving torque from the motor 69 will be transmitted through the gears 66, 118, 117, 115, 110 to the second spur gear 106 of the differential 100 where it will act in opposition to the load applied by the operator. Accordingly, both spur gears 105, 106 will be urged to rotate about their axis of rotation 41 in the same direction. In this situation, the load applied at either end ofthe system will be transmitted through the pinion gears 101, 102 to the carrier 125 which will then urged to rotate with the two spur gears 105, 106, but is prevented from so doing by the arms 131, 132 of the prestressed spring 130 pressing against the stop 151.

The differential 100 will therefore remain locked, i.e. no rotation of the spur gears 105, 106 will occur, until the load applied by the operator to the steering wheel exceeds the preset amount, determined by the amount of prestressing on the coil spring 130. Once the applied load exceeds this preset amount, the two spur gears 105, 106 and the carrier 125 will rotate together about the axis 41 against the biasing of the spring 130, this movement of the carrier 125 being detected by sensing means, and, when the carrier 125 has rotated by a predetermined amount, the clutch 50 is deenergized, disengaging the clutch plates 45, 72, 47 and so allowing the operator full and free control of the vessel. The coil spring 130 will then bias the now unloaded carrier 125 back into its neutral position.

The sensing means preferably takes the form of a light emitter and light detector which are positioned looking at each other with the carrier 125 therebetween preventing the detector receiving the light. A window 155 is then formed in the carrier in such a position that when the carrier is in its neutral position, it obstructs the path between the emitter and detector but when the carrier 125 has rotated through the required angle, the window 155 allows the light from the emitter to reach the detector and so triggers the disengaging of the clutch 50. Two such sensing means are used, one to detect clockwise rotation of the carrier 125 and one to detect anti-clockwise rotation of the carrier

The prestress in the torsional spring 92, 130 in both of the above described arrangements must be sufficient to prevent the clutch plates 45, 47, 72 being automatically disengaged by, say, wave action on the rudder developing an opposing torque in the system, but low enough to ensure that operators of low physical strength are also able to manually over-ride the autopilot.

In another embodiment of the invention not illustrated, the application of opposing torques at each end of the drive system is detected by means of strain gauges applied to at least one shaft in the gear train connecting the servo motor 69 to the helm unit 5. The opposing torques within the gear train will cause stressing of the gear shafts which is detected by the strain gauges, and, when the stress exceeds a preset amount corresponding to a torque of a predetermined magnitude being applied, the clutch assembly 50 is de-energized as in the above described arrangements.

A further embodiment of the system for detecting manual override uses electronic monitoring means, for example, electronic means which monitor the current drawing by the servo motor. The application of a torque to the helm by the operator in opposition to this servo motor will cause an increase in the current drawn by the motor, the increase in the current being dependent of the magnitude of the torque applied by the operator. Accordingly, the electronic means can be programmed to de-energize the clutch assembly when the current drawing by the motor exceeds a set level.

As described above, the threshold levels for signalling for deenergization of the clutch assembly in the above two detection systems is sufficiently large to prevent the clutch assembly from being automatically disengaged by, say, wave loading of the rudder, but low enough to enable manual override to be carried out by an operator of lower physical strength.

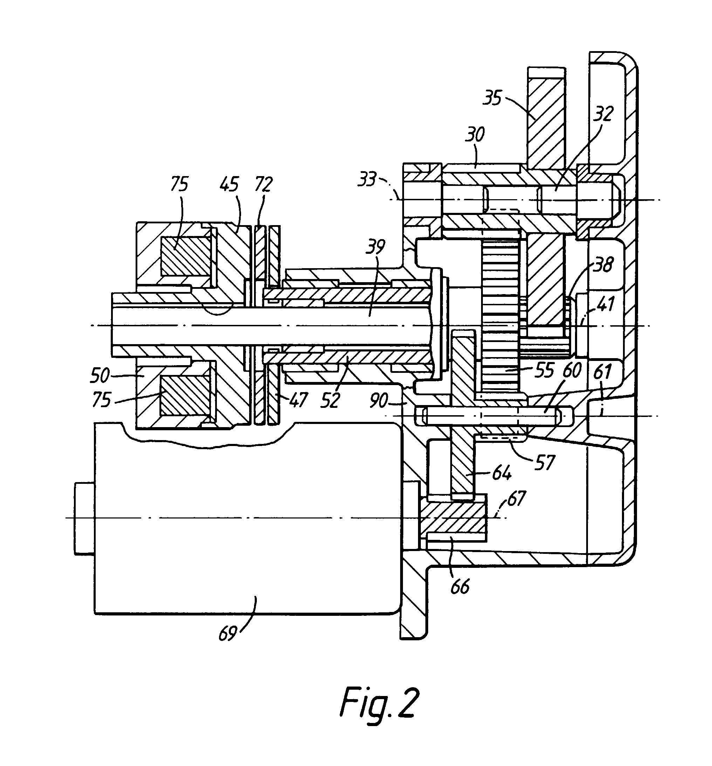

In all the described arrangements, the clutch output shaft 41 is acted upon by a clutch biasing means, preferably a spring which urges the first clutch plate 45 to the left as seen in Figure 2. By this means, when the electromagnet 75 of the clutch assembly 50 is de-energized, the first clutch plate 45 immediately disengages from the intermediate clutch plate 72 under the action of the biasing means, regardless of the relative orientation of the plates or of the magnitude or direction of the torque being transmitted, and the servo motor 69 is therefore immediately isolated from the rotary helm unit 5.

Also, once the clutch has been deenergized to allow the operator full and free control of the craft, it remains disengaged until such time that the operator activates a manual signal to reenergize the clutch and so re-engage the autopilot. This prevents the autopilot steering the craft back on to its preset course immediately the operator lets go of the helm which could steer the craft back towards the obstruction which the operator wished to avoid.

## Claims

1. A boat steering drive system having a manually operable helm unit (5), an autopilot controlled drive means (69), means (30, 32, 35, 38, 39, 50, 52, 55, 57, 64, 66; 30, 32, 35, 38, 39, 100, 110, 112, 115, 117, 118, 120) for drivingly coupling the autopilot controlled drive means (69) to the helm unit (5), and means (50) for enabling manual override of the autopilot controlled drive means (69), characterized by means for ensuring that the autopilot does not steer the craft back on to its preset course following manual override.

2. A boat steering drive system as claimed in claim 1, wherein the means for enabling manual override of the drive means comprises decoupling means (50) for breaking and reconnecting the drive coupling between the drive means (69) and the helm unit (5).

3. A boat steering drive system as claimed in claim 2, wherein the means for enabling manual override of the drive means further comprises means for detecting the initiation of manual override of the autopilot controlled drive means (69).

4. A boat steering drive system as claimed in claim 3, wherein upon detecting that manual override of the drive means (69) is being initiated, the detecting means causes the decoupling means (50) to break the drive coupling between the drive means (69) and the helm unit (5), thereby allowing manual steering to take place.

5. A boat steering drive system as claimed in claim 4, wherein once the decoupling means (50) has broken the drive coupling between the drive means (69) and the helm unit (5), the drive means (69) remains isolated from the helm unit (5) until a manual signal is received from the operator of the craft to reconnect the drive coupling.

6. A boat steering drive system as claimed in claim 4 or claim 5, wherein the means for drivingly coupling the autopilot controlled drive means (69) to the helm unit (5) is a system of gears (30, 32, 35, 38, 39, 50, 52, 55, 57, 64, 66; 30, 32, 35, 38, 39, 100, 110, 112, 117, 118, 120).

7. A boat steering drive system as claimed in claim 6, wherein the decoupling means is a clutch unit (50) disposed within the system of gears.

8. A boat steering drive system as claimed in claim 7, wherein the clutch unit (50) is a plate type clutch.

9. A boat steering drive system as claimed in claim 7 or claim 8, wherein the clutch unit (50) is solenoid (75) actuated.

10. A boat steering drive system as claimed in any of claims 3 to 9, wherein the detecting means is a mechanical detecting means.

11. A boat steering drive system as claimed in claim 10, wherein the mechanical detecting means includes a differential means (100) disposed within the means for drivingly coupling the autopilot controlled drive means (69) to the helm unit (5).

12. A boat steering drive system as claimed in claim 11, wherein the differential means (100) includes a signalling member (125) which, during normal operation of the autopilot, remains stationary but which, upon initiation of manual override of the autopilot, moves, that movement being detected as a signal that manual override is occurring.

13. A boat steering drive system as claimed in claim 12, further including biasing means (130, 151) acting on the signal member (125) which restrains the signal member from movement during normal autopilot operation of the helm unit.

14. A boat steering drive system as claimed in claim 13, wherein, upon application of a preset force to the signal member (125) through the drive coupling (30, 32, 35, 38, 39) from the helm unit (5) during manual override, the signal member (125) moves against the biasing means (130; 151) , thereby signalling manual override is required.

15. A boat steering drive system as claimed in claim 14, wherein the force required to cause movement of the signal member (125) is sufficiently large to prevent wave loading of the steering system causing the signal member (125) to move.

16. A boat steering drive system as claimed in any of claims 11 to 15, wherein the differential means (100) is a gear type differential comprising a pair of parallel, oppositely facing bevel type spur gears (105, 106) sharing a common axis of rotation (41), and at least are bevel type pinion gear (101, 102) disposed between and simultaneously engaging both spur gears (105, 106), the longitudinal axis of the or each pinion gear being perpendicular to the common axis of rotation of the spur gears (41).

17. A boat steering drive system as claimed in claim 16, wherein the differential (100) includes means (130, 151) which bias the or each pinion gear (101, 102) into a set radial position within the differential assembly (100) during normal operation of the autopilot.

18. A boat steering drive system as claimed in claim 17, wherein when the operator applies a load to the helm (5) in order to manually override the autopilot, the or each pinion gear (101, 102) is caused to rotate about the common axis of rotation of the spur gears (41).

19. A boat steering drive system as claimed in claim 18, wherein rotation of the or each pinion gear (101, 102) about the axis of rotation of the spur gears (41) causes the decoupling means (50) to break the drive coupling between the drive means (69) and the helm unit (5), thereby facilitating full and free manual control.

20. A boat steering drive system as claimed in any of claims 16 to 19, wherein the differential means (100) further includes a carrier means (125) disposed between the two spur gears (105, 106) so as to be rotatable about the axis of rotation (41) of the spur gears (105, 106).

21. A boat steering drive system as claimed in claim 20, wherein the carrier means (125) has mounted in it the or each pinion gear (101, 102), the or each pinion gear (101, 102) being able to rotate about its own longitudinal axis but being restrained to move with the carrier (125) for rotation about the axis (41) of the spur gears (105, 106).

22. A boat steering drive means as claimed in claim 21, wherein biasing means (130, 151) bias the carrier means (125) into a first position relative to a part (151) of a fixed casing of the helm unit.

23. A boat steering drive means as claimed in any of claims 18 to 22, wherein the biasing means (130, 151) is prestressed such that rotation of the or each pinion (101, 102) about the axis (41) of the spur gears (105, 106) is prevented until the load applied by the operator through the helm unit (5) exceeds a preset amount.

24. A boat steering drive system as claimed in claim 23, wherein the preset load which must be applied to the helm (5) to cause rotation of the pinion gears (101, 102) about the axis (41) of the spur gears (105, 106) is sufficiently large to prevent wave loading of a rudder causing such rotation, but is not so large as to prevent an operator of weak physical strength from causing such rotation.

25. A boat steering drive system as claimed in claim 24, wherein the biasing means includes a torsional spring (130).

26. A boat steering drive system as claimed in claim 25, wherein the torsional spring (130) is mounted on carrier means (125) and encircles the axis of rotation (41) of the spur gears (105, 106).

27. A boat steering drive system as claimed in claim 26, wherein the torsional spring (130) has a pair of tangentially extending arms (131, 132), the preloading of the spring (130) causing the arms (131, 132) to press towards each other.

28. A boat steering drive system as claimed in claim 27, wherein the arms (131, 132) extend beyond the outer periphery of the differential assembly (100), there being disposed between the free ends of the arms (131, 132) a resilient member (151) such that the arms (131, 132) press against either side of the resilient member (151) and thereby bias the carrier means (125), and hence the or each pinion gear (101, 102) into a first position.

29. A boat steering drive system as claimed in claim 28, wherein the carrier means (125) has a window (155) in it through which, on rotation of the carrier (125) during manual override, a light beam passes, the light beam being detected through the window (155) by an optical sensor which then sends a signal to break the drive coupling between the drive means (69) and the helm unit (5).

30. A boat steering drive system as claimed in any of claims 3 to 9, wherein the detecting means is an electronic detecting means.

31. A boat steering drive system as claimed in claim 30, wherein the detecting means comprises a current sensor which monitors the current drawn by the drive means (69) and signals for the drive means (69) to be decoupled from the helm means (5) if the current exceeds a predetermined level.

32. A boat steering drive system as claimed in claim 30, wherein the detecting means comprises at least one strain gauge which monitors the strain in part of drive coupling means and signals for the drive means (69) to be decoupled from the helm means (5) if the strain exceeds a predetermined level.

33. A boat steering drive system as claimed in any of the preceding claims, wherein the autopilot controlled drive means (69) is a servo motor.

34. A boat steering drive system as claimed in any of the preceding claims, wherein the drive system is housed in a single housing.
